# EUROPEAN PATENT APPLICATION

(11) **EP 4 239 535 A1**
(43) Date of publication of application: **06.09.2023**
(21) Application number: 20959928.1
(22) Date of filing: 02.11.2020
(51) Int. Cl.: G06N 20/00, G06N 3/04, G06N 5/04

(54) **MACHINE LEARNING PROGRAM, INFERENCE PROGRAM, DEVICE, AND METHOD**

(71) Applicant: FUJITSU LIMITED, Kawasaki-shi, Kanagawa 211-8588 (JP)
(72) Inventor: UKAI, Takanori, Kawasaki-shi, Kanagawa 211-8588 (JP)
(74) Representative: Hoffmann Eitle
(86) International application number: PCT/JP2020/041077
(87) International publication number: WO 2022/091413

(57) **Abstract**

A machine learning device inputs training data including embedding vectors of case graph data obtained by graphing case data, embedding vectors of ontology, and correct answer labels to a machine learning model. A first hidden layer of the machine learning model outputs the values of an activation function calculated only with case data features made up of the embedding vectors of the case graph data, a second hidden layer outputs the values of the activation function calculated only with medication features made up of the embedding vectors of medication ontology, a third hidden layer outputs the values of the activation function calculated only with disease features made up of the embedding vectors of disease ontology, and the machine learning device executes machine learning of the machine learning model, based on a loss function calculated by values obtained by merging these values and all features, and correct answer labels.

## Description

### FIELD

The disclosed technique relates to a machine learning technique.

### BACKGROUND

Conventionally, a concerned event has been estimated using a machine learning model in which machine learning has been executed using past cases as training data. For example, a system that calculates similarities between drugs and estimates side effects of a given drug has been proposed. This system includes a similarity calculation device and a side effect determination device. The similarity calculation device obtains data related to drug sets from a plurality of open data sources, generates resource description framework (RDF) triples, and stores an RDF graph of the RDF triples. The similarity calculation device generates feature vectors for each drug, based on the RDF triples, and calculates similarities of each drug to all other drugs by comparing the feature vectors. The side effect determination device estimates side effects of a given drug, based on the similarities between the drugs.

### CITATION LIST

### PATENT DOCUMENT

Patent Document 1: Japanese Laid-open Patent Publication No. 2016-212853

### SUMMARY

### [TECHNICAL PROBLEM]

However, as in the conventional technique described above, there are cases where the accuracy of estimating side effects is not sufficient with only similarities between medications (drugs) obtained by comparing feature vectors. This is because, for example, even patients to which the same medication is administered sometimes experience different situations as to side effects when the patients suffer from different diseases. The situation as described above can arise not only when estimating side effects with similarities between medications, but also when estimating some event using a machine learning model in which machine learning has been executed using past cases as training data.

In one aspect, the disclosed technique aims to train a machine learning model so as to improve the accuracy of event estimation.

### [SOLUTION TO PROBLEM]

In one mode, the disclosed technique accepts input of training data that includes embedding vectors of graph data, embedding vectors of ontology, and correct answer labels. In addition, the disclosed technique executes machine learning of a machine learning model, based on a loss function. The loss function is calculated by values obtained by merging the values of an activation function calculated only with the embedding vectors of the graph data of the input training data and the values of the activation function calculated only with the embedding vectors of the ontology of the training data, and the correct answer labels.

According to an aspect of the embodiments, a machine learning program that causes a computer to execute a process, the process incdlues accepting input of training data that includes embedding vectors of graph data, the embedding vectors of ontology, and correct answer labels; based on a loss function calculated by: values obtained by merging the values of an activation function calculated only with the embedding vectors of the graph data of the input training data, and the values of the activation function calculated only with the embedding vectors of the ontology of the input training data; and the correct answer labels, executing machine learning of a machine learning model.

### [ADVANTAGEOUS EFFECTS OF INVENTION]

In one aspect, the effect that a machine learning model may be trained so as to improve the accuracy of event estimation is achieved.

### BRIEF DESCRIPTION OF DRAWINGS

FIG. 1 is a functional block diagram of a machine learning device;
FIG. 2 is a diagram illustrating an example of machine learning case data;
FIG. 3 is a diagram illustrating examples of ontology;
FIG. 4 is a diagram for explaining the generation of case graph data;
FIG. 5 is a diagram for explaining coupling of the ontology to the case graph data;
FIG. 6 is a diagram for explaining the calculation of embedding vectors;
FIG. 7 is a diagram illustrating an example of training data;
FIG. 8 is a diagram schematically illustrating a network configuration of a machine learning model;
FIG. 9 is a functional block diagram of an estimation device;
FIG. 10 is a diagram illustrating an example of estimation object case data and an estimation result;
FIG. 11 is a block diagram illustrating a schematic configuration of a computer that functions as the machine learning device;
FIG. 12 is a block diagram illustrating a schematic configuration of a computer that functions as the estimation device;
FIG. 13 is a flowchart illustrating an example of machine learning processing;
FIG. 14 is a flowchart illustrating an example of estimation processing;
FIG. 15 is a diagram for explaining a case where embedding vectors of the case graph data are calculated with embedding vectors of the ontology as initial values;
FIG. 16 is a diagram for explaining a case where embedding vectors of the case graph data are calculated with embedding vectors of the ontology as initial values; and
FIG. 17 is a diagram for explaining a case where embedding vectors of the case graph data are calculated with embedding vectors of the ontology as initial values.

### DESCRIPTION OF EMBODIMENTS

Hereinafter, examples of embodiments according to the disclosed technique will be described with reference to the drawings. Note that, in each of the following embodiments, a case where the disclosed technique is applied to the estimation of an unexpected effect (hereinafter referred to as "side effect") in the administration of medications will be described as an example.

First, before describing the details of the embodiments, the case of using feature vectors that combine ontology with past case data will be considered by taking into account that side effects are sometimes not allowed to be estimated with high accuracy only by comparing the similarities between medications, as in the conventional technique. Case data is assumed to include information such as attributes of patients, medications that were administered, and diseases the patients are suffering from. In addition, ontology is a systematization of background knowledge in a concerned field, and in the case of the present embodiments, for example, information such as the similarities and relationships between diseases, and the similarities between medications and the ingredients contained therein are organized in a tree structure format or the like. There is a possibility that alike side effects will arise, for example, when diseases are similar or when medications containing the same ingredient are administered. Thus, it is considered that such a possibility can be estimated by using a feature vector including information on the ontology as described above, as a feature.

However, it is sometimes difficult to generate feature vectors by arranging features indicating the case data and features indicating the ontology. For example, although it is possible to arrange ingredients contained in medications as features, it is difficult to use relationships between diseases organized in a tree structure format as features.

Thus, the method as follows is conceivable. This method converts the case data into graph data constituted by nodes and edges coupling between the nodes and merges the tree structure ontology to this graph data. This method then calculates embedding vectors expressing each node from the graph data that combines the case data and the ontology. Furthermore, this method is a method that trains a machine learning model using feature vectors generated from these embedding vectors as training data. However, in the case of this method, there is no distinction in handling information regarding the case data and the information regarding the ontology included in the feature vector, and the information on the ontology is sometimes not allowed to be appropriately reflected in the estimation of the event (here, the side effect). Thus, each of the following embodiments ensures that the information on the ontology is appropriately reflected in machine learning of a machine learning model. Hereinafter, each embodiment will be described in detail.

<First Embodiment>

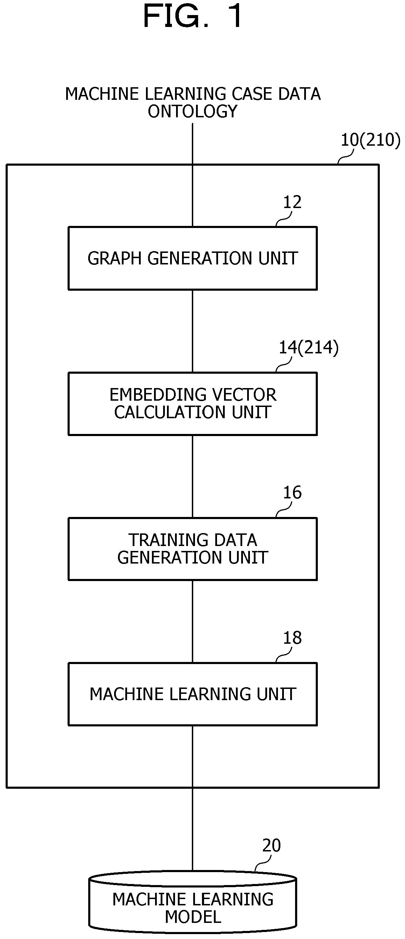

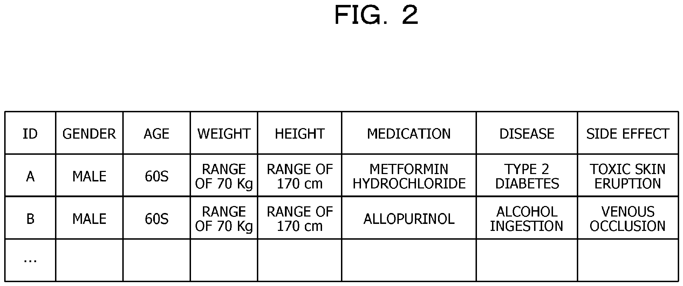

A machine learning system according to a first embodiment includes a machine learning device 10 and an estimation device 30. First, the machine learning device 10 will be described. As illustrated in FIG. 1, machine learning case data and ontology are input to the machine learning device 10. The machine learning case data is data including information such as attributes of patients, medications that were administered, and diseases the patients are suffering from, and information on side effects. FIG. 2 illustrates an example of the machine learning case data. In the example in FIG. 2, information on "identifier (ID)", "gender", "age", "weight", "height", "medication", "disease", and "side effect" is included for each patient. "ID" denotes identification information on the patient. "Gender", "age", "weight", and "height" are examples of attributes of the patient. "Medication" denotes the name of the medication administered to the patient. "Disease" denotes the name of the underlying disease the patient is suffering from. "Side effect" denotes information on the side effect that occurred when the medication indicated in "medication" was administered.

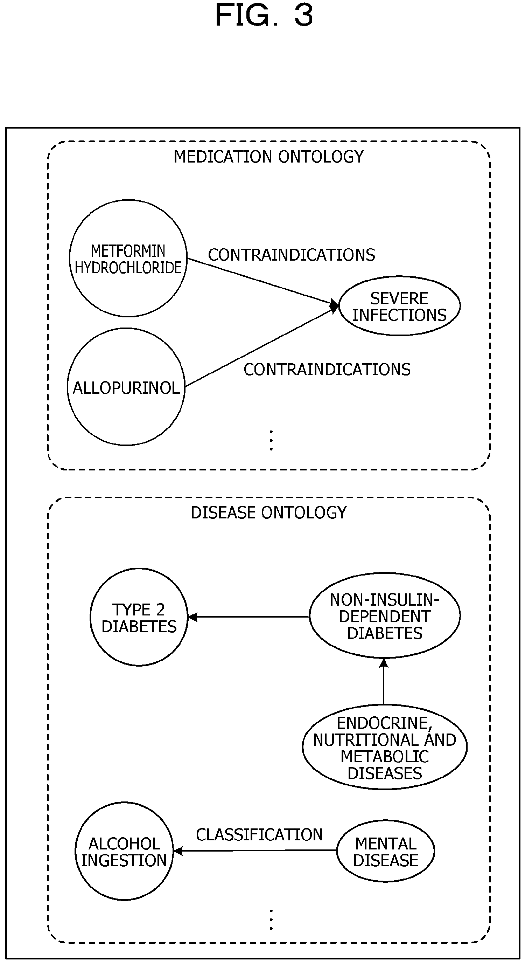

FIG. 3 illustrates examples of ontology. In the present embodiment, a case where ontology relating to medications (hereinafter referred to as "medication ontology") and ontology relating to diseases (hereinafter referred to as "disease ontology") are used will be described. As illustrated in FIG. 3, the medication ontology is tree structure information including nodes indicating medications (circles with medication names written inside), nodes indicating background knowledge (ellipses with background knowledge written inside), and edges (arrows) coupling between related nodes. The edge is sometimes associated with related information indicating how the medication and the background knowledge are related. For example, for medications that are prohibited from being administered to patients with severe infections, the node indicating such a medication and the node indicating severe infections are coupled by an edge, and related information for prohibiting administration (written as "contraindications" in FIG. 3) is attached.

Similarly, the disease ontology is also tree structure information including nodes indicating diseases (circles with disease names written inside), nodes indicating background knowledge (ellipses with background knowledge written inside), and edges (arrows) coupling between related nodes. For example, when a disease called alcohol ingestion is classified as a mental disease, the node indicating alcohol ingestion and the node indicating mental disease are coupled by an edge, and related information such as "classification" is attached to the edge.

The machine learning device 10 functionally includes a graph generation unit 12, an embedding vector calculation unit 14, a training data generation unit 16, and a machine learning unit 18, as illustrated in FIG. 1.

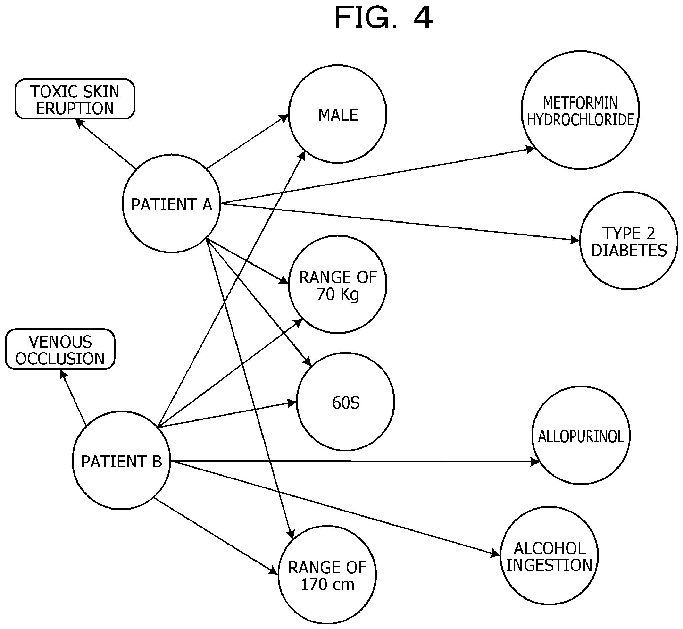

The graph generation unit 12 acquires the machine learning case data input to the machine learning device 10 and generates graph data constituted by nodes and edges coupling between the nodes, from the acquired machine learning case data. For example, as illustrated in FIG. 4, the graph generation unit 12 generates each value of each item other than the side effect included in the machine learning case data, as a node. In FIG. 4, the nodes indicated by circles with respective values written inside are nodes each indicating one of attributes, medications, and diseases. Then, the graph generation unit 12 couples edges from each node with "ID" to nodes each indicating one of attributes, medications, and diseases of the patient indicated by that ID. Note that, in FIG. 4, in order to clarify the relationship between each piece of case data and side effects, nodes indicating side effects (nodes indicated by rounded squares with side effects written inside), and edges coupling the nodes with "ID" and the nodes indicating side effects are also depicted. In addition, the method of generating the graph data is not limited to the above example, and other methods may be employed. The graph data generated from the case data will be hereinafter referred to as "case graph data". Note that, in the following description, the case graph data does not include the nodes indicating side effects.

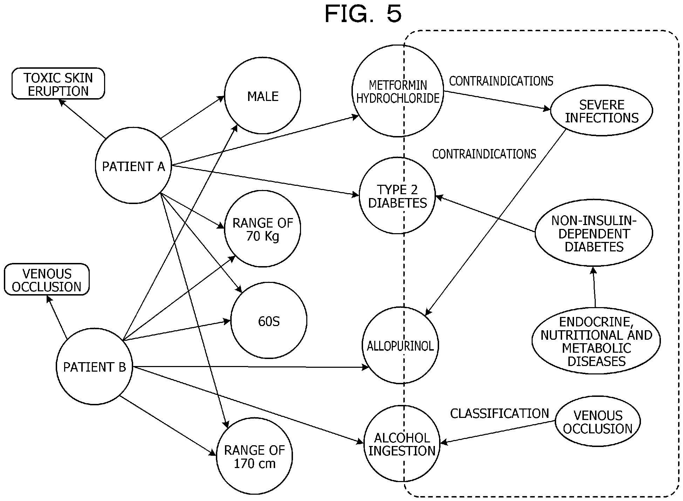

In addition, the graph generation unit 12 generates graph data in which the ontology is coupled to the case graph data based on the machine learning case data. Specifically, the graph generation unit 12 couples the case graph data and the ontology by sharing matching nodes between the case graph data and the ontology. For example, the graph generation unit 12 searches the medication ontology and the disease ontology for nodes that match the nodes indicating "medications" and "diseases" included in the case graph data and extracts the nodes found by the search and the portions coupled to these nodes. Then, the graph generation unit 12 couples the portions extracted from the ontology to the case graph data so as to superimpose the matching nodes indicating "medications" or "diseases", as in the portion indicated by the dashed line in FIG. 5. In the following, the graph data obtained by coupling the portions extracted from the ontology to the case graph data will be referred to as "overall graph data".

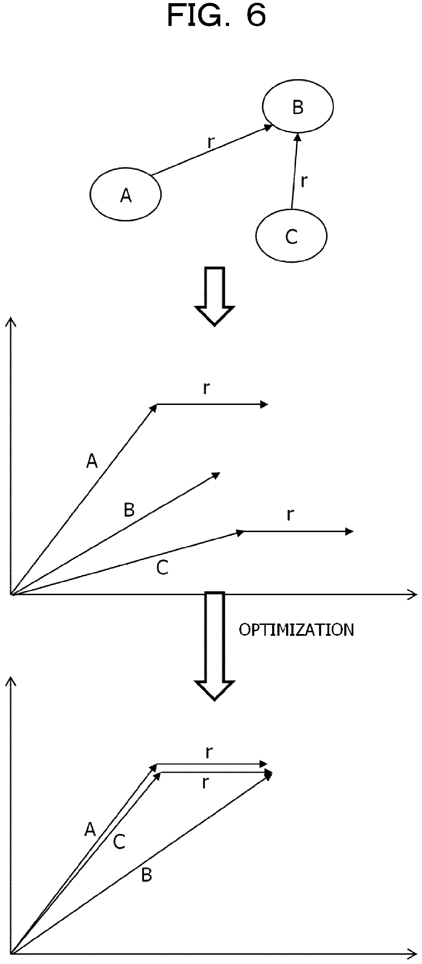

The embedding vector calculation unit 14 calculates embedding vectors representing each node included in the overall graph data, based on the overall graph data. Specifically, the embedding vector calculation unit 14 calculates the embedding vectors by mapping each of the nodes and edges included in the overall graph data to an n-dimensional vector space. More specifically, as illustrated in the upper diagram of FIG. 6, calculation of the embedding vectors by the embedding vector calculation unit 14 will be described taking graph data including nodes A, B, and C, an edge r between the nodes A and B, and an edge r between the nodes C and B as an example. To simplify the explanation, the case of mapping to a two-dimensional vector space will be described here.

First, as illustrated in the middle diagram of FIG. 6, the embedding vector calculation unit 14 places each of the nodes and edges included in the graph data in the vector space as initial value vectors. Then, the embedding vector calculation unit 14 optimizes the placement of each vector so as to represent the coupling relationship between the nodes. In the example in FIG. 6, the embedding vector calculation unit 14 optimizes the placement of each vector such that the vector A + vector r is made closer to the vector B, and the vector C + vector r is made closer to the vector B, as illustrated in the lower diagram of FIG. 6. The vector after optimization is regarded as the embedding vector of the node indicated by that vector. The embedding vector calculation unit 14 calculates the embedding vectors for each node included in the overall graph data, by the calculation method as described above.

The training data generation unit 16 uses the embedding vectors calculated by the embedding vector calculation unit 14 and correct answer labels generated from information on side effects to generate training data to be used for machine learning of the machine learning model. Specifically, for each node with "ID" included in the overall graph data, the training data generation unit 16 generates features by concatenating the vector values of the embedding vectors calculated for each node coupled to each node with "ID". Then, based on the information on side effects, the training data generation unit 16 generates a correct answer label indicating "TRUE" when the concerned side effect has been caused, and a correct answer label indicating "FALSE" when the concerned side effect has not been caused, and generates training data by adding the generated correct answer labels to the features.

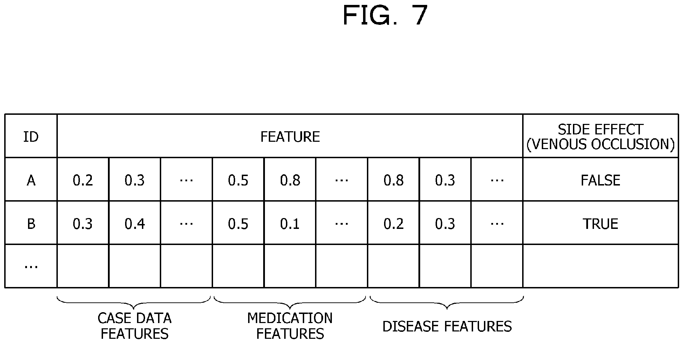

FIG. 7 illustrates an example of the training data. As illustrated in FIG. 7, since the vector values of the embedding vectors for each node are concatenated, the features include features obtained by concatenating the embedding vectors of the nodes of the case graph data (hereinafter referred to as "case data features"). The features will also include features obtained by concatenating the embedding vectors of the nodes of the medication ontology (hereinafter referred to as "medication features"), and features obtained by concatenating the embedding vectors of the nodes of the disease ontology (hereinafter referred to as "disease features"). Note that the embedding vectors of the nodes common to the case graph data and the ontology (the nodes of the case data indicating the items "medication" and "disease") are included in both of the case data features and the medication features or disease features. In addition, the example in FIG. 7 illustrates a case where the concerned side effect is assumed as "venous occlusion".

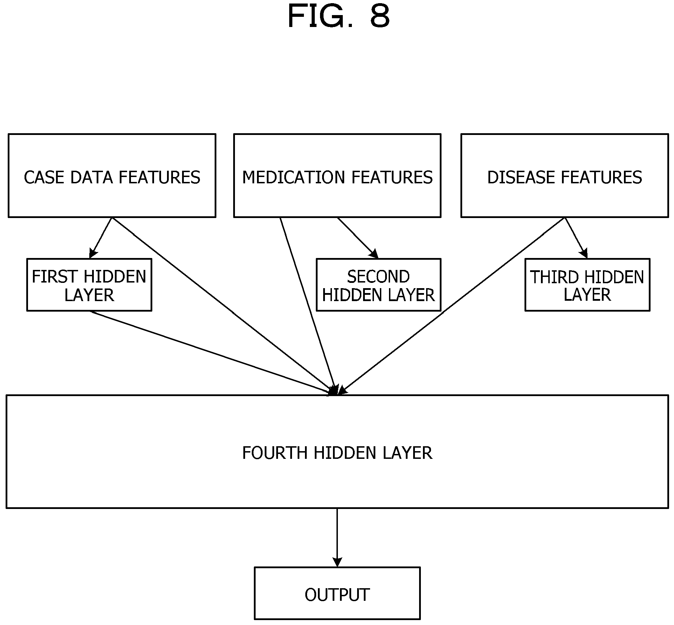

The machine learning unit 18 uses the training data generated by the training data generation unit 16 to update the parameters of a machine learning model 20, for example, constituted by a neural network or the like. Here, FIG. 8 schematically illustrates a network configuration of the machine learning model 20. As illustrated in FIG. 8, the machine learning model 20 includes a first hidden layer, a second hidden layer, a third hidden layer, and a fourth hidden layer. From the training data, the case data features are input to the first hidden layer, the medication features are input to the second hidden layer, and the disease features are input to the third hidden layer. The output from each of the first hidden layer, the second hidden layer, and the third hidden layer and all the features included in the training data are input to the fourth hidden layer. The machine learning model 20 then outputs the probability that the concerned side effect is caused, based on the output from the fourth hidden layer.

The machine learning unit 18 updates the parameters of the machine learning model 20 having the network configuration as described above so as to minimize the value LOSS of the loss function indicated below.
LOSS = g(Label, Output)
Output = f4(T, O1, O2, f1(T), f2(O1), f3(O2))

The loss function of A and B is denoted by g(A, B) and, for example, is a function for working out the sum-of-squares error, cross-entropy error, and the like. The function that returns 1 when the correct answer label has TRUE and 0 when the correct answer label has FALSE is denoted by Label. The output value when features of the training data are input to the machine learning model 20 is denoted by Output. A vector made up of the case data feature among the features included in the training data is denoted by T. A vector made up of the medication feature among the features included in the training data is denoted by 01. A vector made up of the disease feature among the features included in the training data is denoted by 02. The activation function corresponding to the first hidden layer is denoted by f1, the activation function corresponding to the second hidden layer is denoted by f2, and the activation function corresponding to the third hidden layer is denoted by f3. These activation functions are, for example, rectified linear units (ReLUs). That is, the value of the activation function calculated only with the embedding vectors of the nodes of the case graph data in the input training data is denoted by f1(T). In addition, the value of the activation function calculated only with the embedding vectors of the nodes of the medication ontology in the input training data is denoted by f2(01). Likewise, the value of the activation function calculated only with the embedding vectors of the nodes of the disease ontology in the input training data is denoted by f3(02). The activation function corresponding to the fourth hidden layer is denoted by f4 and, for example, is a sigmoid function. That is, the value obtained by applying the activation function to the vector obtained by merging all features and output from each of the first to third hidden layers is denoted by f4(T, 01, 02, f1(T), f2(O1), f3(O2)).

In cases such as when the value LOSS of the loss function described above is equal to or lower than a predetermined threshold value, when the difference from previously worked-out LOSS is equal to or lower than a predetermined value, and when the number of iterations of machine learning has reached a predetermined number, the machine learning unit 18 concludes that the value LOSS of the loss function has been minimized. When concluding that the value LOSS of the loss function has been minimized, the machine learning unit 18 ends the machine learning and outputs the machine learning model 20 including information on the network configuration and the values of the parameters at the time point when the machine learning ended.

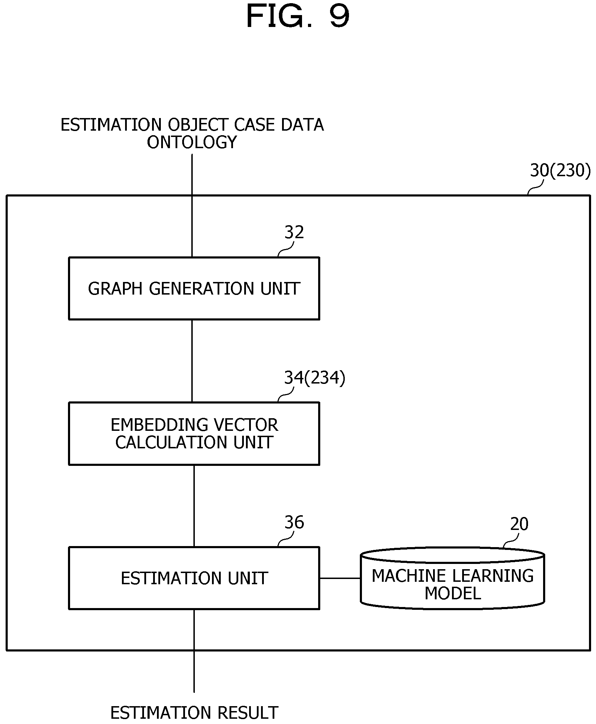

Next, the estimation device 30 will be described. As illustrated in FIG. 9, the ontology and estimation object case data, which is case data for which the correct answer is unknown and which is the object to be estimated as to side effects, are input to the estimation device 30. The estimation object case data is case data obtained by removing the item "side effect" from the machine learning case data.

The estimation device 30 functionally includes a graph generation unit 32, an embedding vector calculation unit 34, and an estimation unit 36, as illustrated in FIG. 9. In addition, in a predetermined storage area of the estimation device 30, the machine learning model 20 output from the machine learning device 10 is stored.

The graph generation unit 32 is similar to the graph generation unit 12 of the machine learning device 10, except that the data from which the graph data is generated is the estimation object case data instead of the machine learning case data. In addition, the embedding vector calculation unit 34 is also similar to the embedding vector calculation unit 14 of the machine learning device 10.

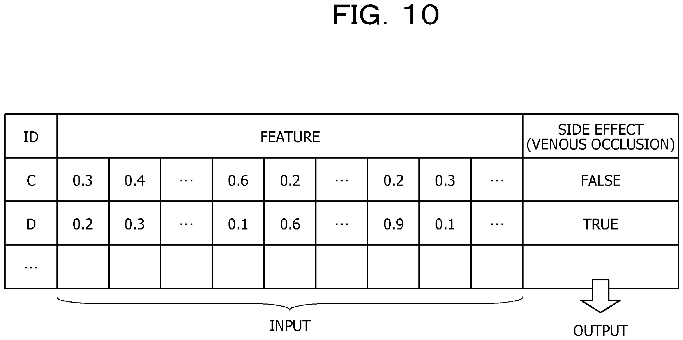

For each node with "ID" included in the overall graph data generated by the graph generation unit 32, the estimation unit 36 generates features by concatenating the vector values of the embedding vectors calculated by the embedding vector calculation unit 34 for each node coupled to each node with "ID". The features to be generated include each of the case data features, the medication features, and the disease features, similar to the features included in the training data generated by the training data generation unit 16 of the machine learning device 10. By inputting the generated features to the machine learning model 20, the estimation unit 36 outputs an estimation result indicating whether or not the concerned side effect is to occur for the estimation object case data. For example, as illustrated in FIG. 10, the estimation unit 36 inputs, to the machine learning model 20, the features generated from the estimation object case data for each of patients whose "IDs" are C and D, and acquires the probability that the concerned side effect occurs. The estimation unit 36 outputs TRUE when the acquired probability is equal to or higher than a predetermined value and outputs FALSE when the acquired probability is lower than the predetermined value. Note that the estimation unit 36 may output the probability output from the machine learning model 20 as it is as the estimation result.

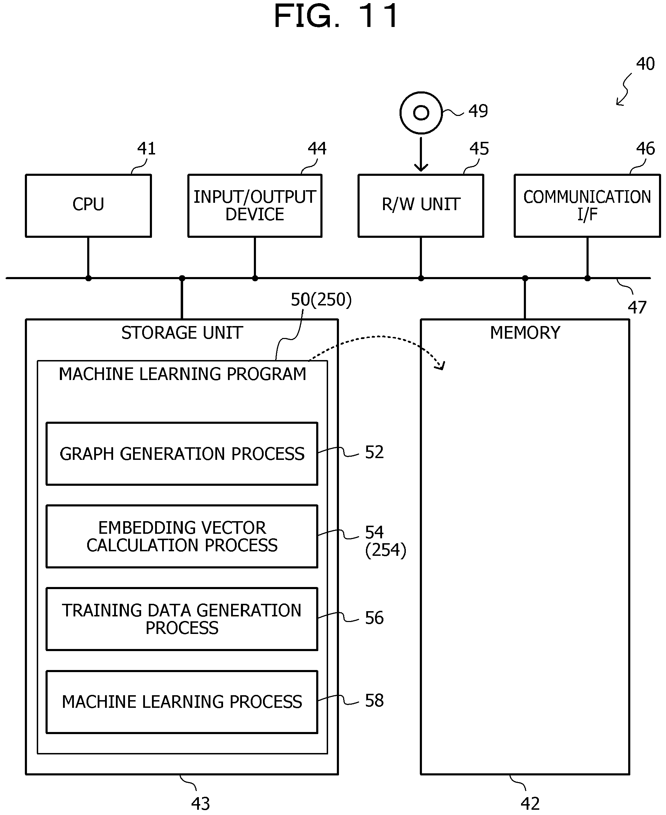

The machine learning device 10 can be implemented by a computer 40 illustrated in FIG. 11, for example. The computer 40 includes a central processing unit (CPU) 41, a memory 42 as a temporary storage area, and a nonvolatile storage unit 43. In addition, the computer 40 includes an input/output device 44 such as an input unit or a display unit, and a read/write (R/W) unit 45 that controls reading and writing of data from and to a storage medium 49. The computer 40 also includes a communication interface (I/F) 46 to be coupled to a network such as the Internet. The CPU 41, the memory 42, the storage unit 43, the input/output device 44, the R/W unit 45, and the communication I/F 46 are coupled to one another via a bus 47.

The storage unit 43 can be implemented by a hard disk drive (HDD), a solid state drive (SSD), a flash memory, or the like. The storage unit 43 as a storage medium stores a machine learning program 50 for causing the computer 40 to function as the machine learning device 10. The machine learning program 50 has a graph generation process 52, an embedding vector calculation process 54, a training data generation process 56, and a machine learning process 58.

The CPU 41 reads the machine learning program 50 from the storage unit 43 to load the read machine learning program 50 into the memory 42 and sequentially executes the processes included in the machine learning program 50. The CPU 41 operates as the graph generation unit 12 illustrated in FIG. 1 by executing the graph generation process 52. In addition, the CPU 41 operates as the embedding vector calculation unit 14 illustrated in FIG. 1 by executing the embedding vector calculation process 54. The CPU 41 also operates as the training data generation unit 16 illustrated in FIG. 1 by executing the training data generation process 56. The CPU 41 also operates as the machine learning unit 18 illustrated in FIG. 1 by executing the machine learning process 58. This will cause the computer 40 that has executed the machine learning program 50 to function as the machine learning device 10. Note that the CPU 41 that executes the program is hardware.

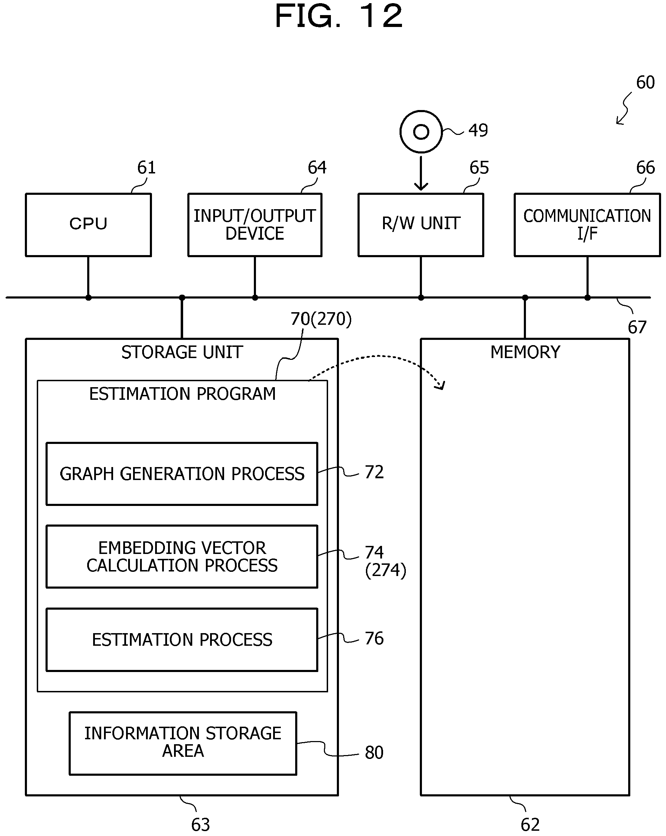

The estimation device 30 can be implemented by, for example, a computer 60 illustrated in FIG. 12. The computer 60 includes a CPU 61, a memory 62, a storage unit 63, an input/output device 64, an R/W unit 65, and a communication I/F 66. The CPU 61, the memory 62, the storage unit 63, the input/output device 64, the R/W unit 65, and the communication I/F 66 are coupled to one another via a bus 67.

The storage unit 63 can be implemented by an HDD, an SSD, a flash memory, or the like. The storage unit 63 as a storage medium stores an estimation program 70 for causing the computer 60 to function as the estimation device 30. The estimation program 70 has a graph generation process 72, an embedding vector calculation process 74, and an estimation process 76. In addition, the storage unit 63 includes an information storage area 80 in which information constituting the machine learning model 20 that has undergone machine learning is stored.

The CPU 61 reads the estimation program 70 from the storage unit 63 to load the read estimation program 70 into the memory 62 and sequentially executes the processes included in the estimation program 70. The CPU 61 operates as the graph generation unit 32 illustrated in FIG. 9 by executing the graph generation process 72. The CPU 61 also operates as the embedding vector calculation unit 34 illustrated in FIG. 9 by executing the embedding vector calculation process 74. The CPU 61 also operates as the estimation unit 36 illustrated in FIG. 9 by executing the estimation process 76. In addition, the CPU 61 reads information from the information storage area 80 to load the machine learning model 20 into the memory 62. This will cause the computer 60 that has executed the estimation program 70 to function as the estimation device 30. Note that the CPU 61 that executes the program is hardware.

Note that the functions implemented by each of the machine learning program 50 and the estimation program 70 can also be implemented by, for example, a semiconductor integrated circuit, in more detail, an application specific integrated circuit (ASIC) or the like.

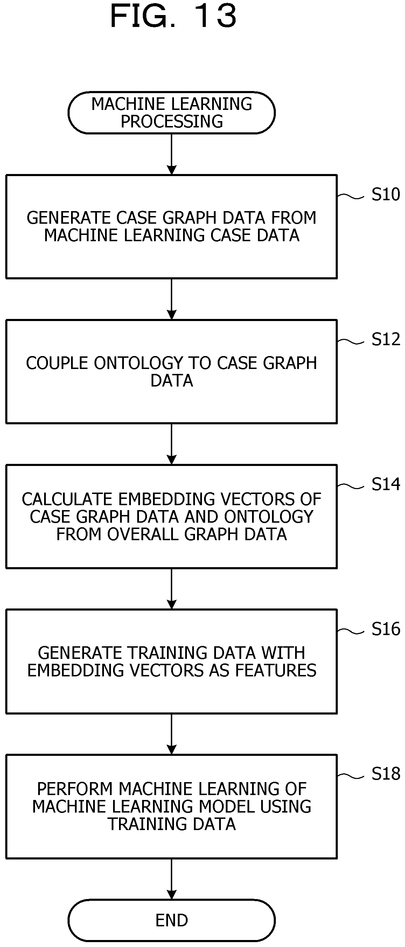

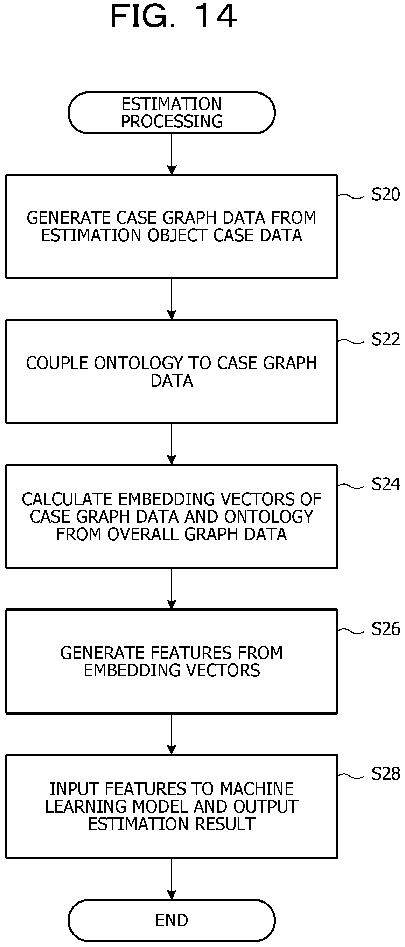

Next, an effect of a machine learning system according to the first embodiment will be described. First, when the machine learning case data and the ontology are input to the machine learning device 10, the machine learning device 10 executes machine learning processing illustrated in FIG. 13. Then, the machine learning model 20 that has been subjected to machine learning by executing the machine learning processing is output from the machine learning device 10. When the estimation device 30 acquires the machine learning model 20 output from the machine learning device 10 and the estimation object case data and the ontology are input to the estimation device 30 in a state with the acquired machine learning model 20 stored in a predetermined storage area, the estimation device 30 executes estimation processing illustrated in FIG. 14. Note that the machine learning processing is an example of a machine learning method of the disclosed technique, and the estimation processing is an example of an estimation method of the disclosed technique. Hereinafter, each of the machine learning processing and the estimation processing will be described in detail.

First, the machine learning processing illustrated in FIG. 13 will be described. In step S10, the graph generation unit 12 generates each value of each item of the machine learning case data as a node. Then, the graph generation unit 12 generates the case graph data by coupling edges from each node with "ID" to nodes each indicating one of attributes, medications, and diseases of the patient indicated by that ID.

Next, in step S12, the graph generation unit 12 searches the medication ontology and the disease ontology for nodes that match the nodes indicating "medications" and "diseases" included in the case graph data and extracts the nodes found by the search and the portions coupled to these nodes. Then, the graph generation unit 12 couples the portions extracted from the ontology to the case graph data so as to superimpose the matching nodes indicating "medications" or "diseases" and generates the overall graph data.

Next, in step S14, the embedding vector calculation unit 14 places each of the nodes and edges included in the overall graph data in an n-dimensional vector space as an initial value vector. Then, the embedding vector calculation unit 14 calculates the embedding vector of each node included in the overall graph data, by optimizing the placement of each vector so as to represent the coupling relationship between the nodes. Therefore, the embedding vector of each node of the case graph data and the embedding vector of each node of the ontology are calculated.

Next, in step S16, for each node with "ID" included in the overall graph data, the training data generation unit 16 generates features by concatenating the vector values of the embedding vectors calculated for each node coupled to each node with "ID". Then, the training data generation unit 16 generates the correct answer labels for the concerned side effect, based on the information on the side effect, and adds the generated correct answer labels to the features to generate the training data.

Next, in step S18, the machine learning unit 18 uses the training data generated in above step S16 to update the parameters of the machine learning model 20 so as to minimize the value LOSS of the loss function described above. When concluding that the value LOSS of the loss function has been minimized, the machine learning unit 18 ends the machine learning and outputs the machine learning model 20 including information on the network configuration and the values of the parameters at the time point when the machine learning ended, which completes the machine learning processing.

Next, the estimation processing illustrated in FIG. 14 will be described. In step S20, the graph generation unit 32 generates the case graph data from the estimation object case data. Next, in step S22, the graph generation unit 32 couples the ontology to the case graph data and generates the overall graph data. Next, in step S24, the embedding vector calculation unit 34 calculates the embedding vector of each node of the case graph data and the ontology from the overall graph data. Next, in step S26, for each node with "ID" included in the overall graph data, the estimation unit 36 generates features by concatenating the vector values of the embedding vectors calculated for each node coupled to each node with "ID". Next, in step S28, by inputting the features generated in above step S26 to the machine learning model 20, the estimation unit 36 outputs the estimation result indicating whether or not the concerned side effect is to occur for the estimation object case data, and the estimation processing ends.

As described above, according to the machine learning system according to the first embodiment, the machine learning device accepts input of the training data including embedding vectors of the case graph data, the embedding vectors of the ontology, and the correct answer labels. The machine learning device then executes machine learning of the machine learning model, based on the loss function. The values of the loss function are calculated by values obtained by merging the values of the activation function calculated only with the embedding vectors of the case graph data of the input training data and the values of the activation function calculated only with the embedding vectors of the ontology, and the correct answer labels. This allows the machine learning device according to the first embodiment to train a machine learning model in which information on the case data and information on the ontology are grouped and transmitted. Therefore, the machine learning device according to the first embodiment may train the machine learning model by appropriately reflecting the information on the ontology so as to improve the accuracy of event estimation.

In addition, according to the machine learning system according to the first embodiment, the estimation device uses the machine learning model that has been subjected to the machine learning as described above and the embedding vectors calculated from the estimation object case data and the ontology to estimate an event for the estimation object case. This may improve the accuracy of event estimation.

### <Second Embodiment>

Next, a second embodiment will be described. Note that, in a machine learning system according to the second embodiment, similar parts to those of the machine learning system according to the first embodiment are designated by the same reference signs and detailed description thereof will be omitted.

A machine learning system according to the second embodiment includes a machine learning device 210 and an estimation device 230. First, the machine learning device 210 will be described. The machine learning device 210 functionally includes a graph generation unit 12, an embedding vector calculation unit 214, a training data generation unit 16, and a machine learning unit 18, as illustrated in FIG. 1.

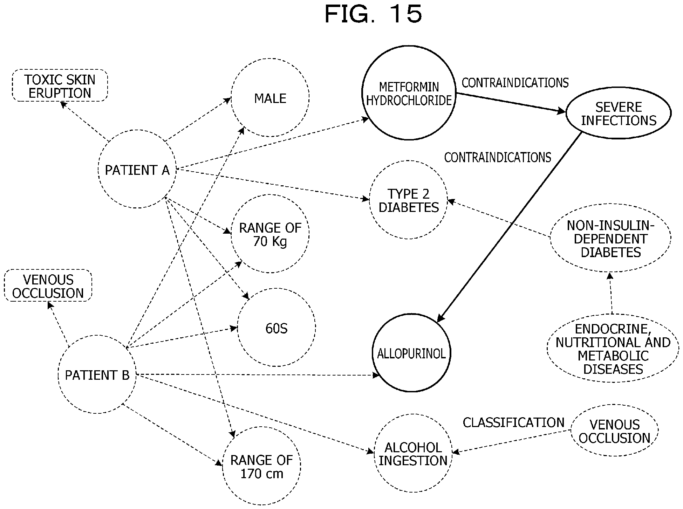

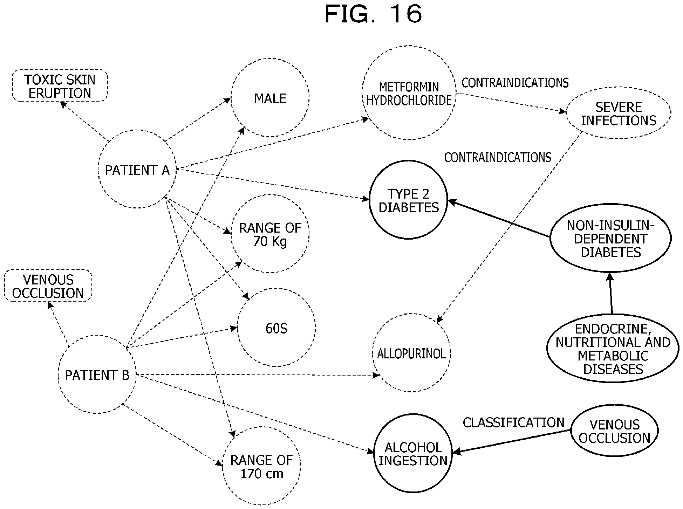

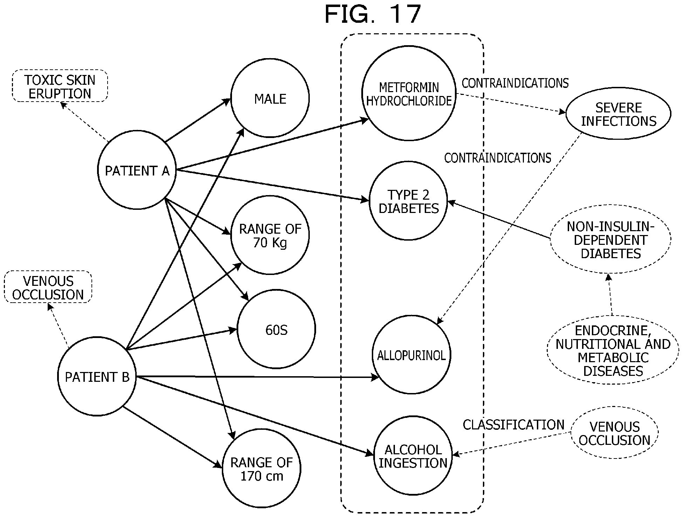

The embedding vector calculation unit 214 first calculates embedding vectors of nodes of ontology in an overall graph data in which the ontology is coupled to the case graph data. For example, as illustrated in FIG. 15, the embedding vector calculation unit 214 calculates embedding vectors of nodes of medication ontology (the nodes indicated by the solid lines in FIG. 15). In addition, as illustrated in FIG. 16, the embedding vector calculation unit 214 calculates embedding vectors of nodes of disease ontology (the nodes indicated by the solid lines in FIG. 16). Then, as illustrated in FIG. 17, the embedding vector calculation unit 214 calculates embedding vectors of the nodes of the case graph data (the nodes indicated by the solid lines in FIG. 16) with the embedding vectors of the nodes of the ontology as initial values (the dashed line portion in FIG. 17).

Since the ontology is a systematization of background knowledge, the embedding vector of the ontology accurately reflects the meaning that the coupling between nodes has. Since the embedding vector can be calculated with higher accuracy when the initial values are more appropriately given, the embedding vectors of the case graph data can be calculated with higher accuracy, by using the embedding vectors of the ontology as initial values.

The estimation device 230 functionally includes a graph generation unit 32, an embedding vector calculation unit 234, and an estimation unit 36, as illustrated in FIG. 9. In addition, in a predetermined storage area of the estimation device 230, a machine learning model 20 output from the machine learning device 210 is stored. Similar to the embedding vector calculation unit 214 of the machine learning device 210, the embedding vector calculation unit 234 first calculates the embedding vectors of the ontology and, with these calculated embedding vectors as initial values, calculates the embedding vectors of the case graph data.

The machine learning device 210 can be implemented by a computer 40 illustrated in FIG. 11, for example. A storage unit 43 of the computer 40 stores a machine learning program 250 for causing the computer 40 to function as the machine learning device 210. The machine learning program 250 has a graph generation process 52, an embedding vector calculation process 254, a training data generation process 56, and a machine learning process 58.

A CPU 41 reads the machine learning program 250 from the storage unit 43 to load the read machine learning program 250 into a memory 42 and sequentially executes the processes included in the machine learning program 250. The CPU 41 operates as the embedding vector calculation unit 214 illustrated in FIG. 1 by executing the embedding vector calculation process 254. The other processes are similar to the processes of the machine learning program 50 according to the first embodiment. This will cause the computer 40 that has executed the machine learning program 250 to function as the machine learning device 210.

The estimation device 230 can be implemented by, for example, a computer 60 illustrated in FIG. 12. A storage unit 63 of the computer 60 stores an estimation program 270 for causing the computer 60 to function as the estimation device 230. The estimation program 270 has a graph generation process 72, an embedding vector calculation process 274, and an estimation process 76. In addition, the storage unit 63 includes an information storage area 80 in which information constituting the machine learning model 20 that has undergone machine learning is stored.

The CPU 61 reads the estimation program 270 from the storage unit 63 to load the read estimation program 270 into a memory 62 and sequentially executes the processes included in the estimation program 270. The CPU 61 operates as the embedding vector calculation unit 234 illustrated in FIG. 9 by executing the embedding vector calculation process 274. The other processes are similar to the processes of the estimation program 70 according to the first embodiment. This will cause the computer 60 that has executed the estimation program 270 to function as the estimation device 230.

Note that the functions implemented by each of the machine learning program 250 and the estimation program 270 can also be implemented by, for example, a semiconductor integrated circuit, in more detail, an ASIC or the like.

As for the effect of the machine learning system according to the second embodiment, only the embedding vector calculation procedures in step S14 of the machine learning processing illustrated in FIG. 13 and step S24 of the estimation processing illustrated in FIG. 14 are different from the embedding vector calculation procedures of the first embodiment as described above, and therefore the description thereof will be omitted.

As described above, according to the machine learning system of the second embodiment, the machine learning device first calculates the embedding vectors of the ontology and, with these calculated embedding vectors as initial values, calculates the embedding vectors of the case graph data. This allows calculation of the embedding vectors with high accuracy, such that the machine learning model may be trained so as to improve the accuracy of event estimation. In addition, the accuracy of event estimation may be improved in the estimation device according to the second embodiment.

Note that, in the above second embodiment, the case where all embedding vectors of the nodes included in the ontology are used as features has been described, but the embodiments are not limited to this. After calculating the embedding vectors by a procedure similar to the procedure in the second embodiment, the medication features and disease features may be generated from the embedding vectors of nodes common between the case graph data and the ontology. That is, in the example in FIG. 17, the case data features may be generated from the embedded graph of the nodes of the case graph data indicated by the solid lines, and the medication features and the disease features may be generated from the embedded graph of the nodes surrounded by the dashed line among the nodes of the case graph data. Even in this case, since the embedding vectors of the case graph data are calculated with the embedding vectors of the ontology as initial values, information on the ontology is reflected in the features. Furthermore, since the amount of information on the features can be reduced, the load of machine learning processing and estimation processing may be lessened. In addition, in this case, the embedding vectors of the ontology calculated without coupling the ontology to the case graph data may be given as initial values of the embedding vectors of the case graph data. The embedding vectors of the ontology in this case may be calculated for the specified portion of the ontology by specifying the portion of the ontology including nodes that match the nodes of the case graph data indicating medications and diseases.

In addition, in each of the above embodiments, an example in which the disclosed technique is applied to the case of estimating side effects to the administration of a medication to a patient has been described, but the disclosed technique can also be applied to an example of estimating other events. For example, the application to the case of estimating an event that occurs when mixing a plurality of chemical substances, or the like is possible. In this case, the case data can include information such as chemical substances to be mixed, mixing conditions (temperature, catalyst, and the like), information on chemical substances with similar properties, such as the melting points of substances A and B being the same, or the like can be used as ontology, and events that occur during mixing can be treated as correct answer labels.

In addition, in each of the above embodiments, the case of using two types of ontology has been described, but one type of ontology may be used, or three or more types of ontology may be used. In this case, the hidden layers of the machine learning model can be provided in correspondence to each type of ontology to be used.

In addition, in each of the above embodiments, the case where the machine learning device and the estimation device are configured by separate computers has been described, but the machine learning device and the estimation device may be configured by one computer.

In addition, while a mode in which the machine learning program and the estimation program are stored (installed) in the storage unit in advance has been described in each of the above embodiments, the embodiments are not limited to this. The program according to the disclosed technique can also be provided in a form stored in a storage medium such as a compact disc read only memory (CD-ROM), a digital versatile disc read only memory (DVD-ROM), or a universal serial bus (USB) memory.

### REFERENCE SIGNS LIST

10, 210 Machine learning device
12Graph generation unit
14, 214 Embedding vector calculation unit
16Training data generation unit
18Machine learning unit
20 Machine learning model
30, 230 Estimation device
32Graph generation unit
34, 234 Embedding vector calculation unit
36 Estimation unit
40,60 Computer
41,61 CPU
42, 62 Memory
43, 63 Storage unit
49Storage medium
50, 250 Machine learning program
70, 270 Estimation program

## Claims

1. A machine learning program that causes a computer to execute a process, the process comprising:
accepting input of training data that includes embedding vectors of graph data, the embedding vectors of ontology, and correct answer labels;
based on a loss function calculated by: values obtained by merging the values of an activation function calculated only with the embedding vectors of the graph data of the input training data, and the values of the activation function calculated only with the embedding vectors of the ontology of the input training data; and the correct answer labels, executing machine learning of a machine learning model.

2. The machine learning program according to claim 1, wherein the process further comprising
calculating the embedding vectors of the graph data with the embedding vectors of the ontology as initial values for a common portion between the graph data and the ontology.

3. The machine learning program according to claim 2, wherein
the values of the activation function calculated only with the embedding vectors of the ontology is calculated with the embedding vectors of the common portion.

4. The machine learning program according to claim 1, wherein the process further comprising
calculating the embedding vectors of the graph data and the embedding vectors of the ontology, based on an overall graph data in which the ontology is coupled to the graph data.

5. The machine learning program according to claim 4, wherein the process further comprising
calculating, as the calculating the embedding vectors of the graph data, the embedding vectors of the ontology, based on the overall graph data, and calculating the embedding vectors of the graph data with the embedding vectors of the ontology as initial values for a common portion between the graph data and the ontology.

6. The machine learning program according to any one of claims 1 to 5, wherein
the ontology is data obtained by systematizing background knowledge that relates to original data indicated by the graph data.

7. An estimation program for causing a computer to execute a process comprising:
based on a loss function calculated by: values obtained by merging the values of an activation function calculated only with embedding vectors of graph data with training data that includes the embedding vectors of the graph data, the embedding vectors of ontology, and correct answer labels as input, and the values of the activation function calculated only with the embedding vectors of the ontology of the input training data; and the correct answer labels, inputting the embedding vectors of the graph data that indicates estimation object data for which a correct answer is unknown, and the embedding vectors of the ontology to a machine learning model in which machine learning has been executed; and outputting an estimation result for the estimation object data.

8. A machine learning device comprising a control unit that executes a process including:
accepting input of training data that includes embedding vectors of graph data, the embedding vectors of ontology, and correct answer labels;
based on a loss function calculated by: values obtained by merging the values of an activation function calculated only with the embedding vectors of the graph data of the input training data, and the values of the activation function calculated only with the embedding vectors of the ontology of the input training data; and the correct answer labels, executing machine learning of a machine learning model.

9. The machine learning device according to claim 8, wherein
the control unit calculates the embedding vectors of the graph data with the embedding vectors of the ontology as initial values for a common portion between the graph data and the ontology.

10. The machine learning device according to claim 9, wherein
the control unit calculates the values of the activation function calculated only with the embedding vectors of the ontology with the embedding vectors of the common portion.

11. The machine learning device according to claim 8, wherein
the control unit calculates the embedding vectors of the graph data and the embedding vectors of the ontology, based on an overall graph data in which the ontology is coupled to the graph data.

12. The machine learning device according to claim 11, wherein
as the calculating the embedding vectors of the graph data, the control unit calculates the embedding vectors of the ontology, based on the overall graph data, and calculates the embedding vectors of the graph data with the embedding vectors of the ontology as initial values for a common portion between the graph data and the ontology.

13. The machine learning device according to any one of claims 8 to 12, wherein
the ontology is data obtained by systematizing background knowledge that relates to original data indicated by the graph data.

14. An estimation device comprising a control unit that executes a process including:
based on a loss function calculated by: values obtained by merging the values of an activation function calculated only with embedding vectors of graph data with training data that includes the embedding vectors of the graph data, the embedding vectors of ontology, and correct answer labels as input, and the values of the activation function calculated only with the embedding vectors of the ontology of the input training data; and the correct answer labels, inputting the embedding vectors of the graph data that indicates estimation object data for which a correct answer is unknown, and the embedding vectors of the ontology to a machine learning model in which machine learning has been executed; and outputting an estimation result for the estimation object data.

15. A machine learning method for a computer to execute a process comprising:
accepting input of training data that includes embedding vectors of graph data, the embedding vectors of ontology, and correct answer labels;
based on a loss function calculated by: values obtained by merging the values of an activation function calculated only with the embedding vectors of the graph data of the input training data, and the values of the activation function calculated only with the embedding vectors of the ontology of the input training data; and the correct answer labels, executing machine learning of a machine learning model.

16. The machine learning method according to claim 15, wherein the process further comprising
calculating the embedding vectors of the graph data with the embedding vectors of the ontology as initial values for a common portion between the graph data and the ontology.

17. The machine learning program according to claim 16, wherein
the values of the activation function calculated only with the embedding vectors of the ontology is calculated with the embedding vectors of the common portion.

18. The machine learning method according to claim 15, wherein the process further comprising
calculating the embedding vectors of the graph data and the embedding vectors of the ontology, based on an overall graph data in which the ontology is coupled to the graph data.

19. The machine learning method according to claim 18, wherein the process further comprising
calculating, as the calculating the embedding vectors of the graph data, the embedding vectors of the ontology, based on the overall graph data, and calculating the embedding vectors of the graph data with the embedding vectors of the ontology as initial values for a common portion between the graph data and the ontology.

20. An estimation method for a computer to execute a process comprising:
based on a loss function calculated by: values obtained by merging the values of an activation function calculated only with embedding vectors of graph data with training data that includes the embedding vectors of the graph data, the embedding vectors of ontology, and correct answer labels as input, and the values of the activation function calculated only with the embedding vectors of the ontology of the input training data; and the correct answer labels, inputting the embedding vectors of the graph data that indicates estimation object data for which a correct answer is unknown, and the embedding vectors of the ontology to a machine learning model in which machine learning has been executed; and outputting an estimation result for the estimation object data.
